# EUROPÄISCHE PATENTSCHRIFT

(11) **EP 3 712 089 B1**
(45) Veröffentlichungstag und Bekanntmachung des Hinweises auf die Patenterteilung: **21.08.2024**
(21) Anmeldenummer: 20164665.0
(22) Anmeldetag: 20.03.2020
(51) Int. Cl.: B65G 11/14, B65G 17/12, B65G 43/08, B65G 47/19, B65G 47/44, B65G 47/58, B07C 1/00

(54) **FÖRDERVORRICHTUNG SOWIE VERFAHREN ZUR FÖRDERUNG VON AUS EINZELTEILEN BESTEHENDEM SCHÜTTGUT**
CONVEYING DEVICE AND METHOD FOR CONVEYING BULK MATERIAL CONSISTING OF INDIVIDUAL PARTS
DISPOSITIF DE TRANSPORT AINSI QUE PROCÉDÉ DE TRANSPORT DES MARCHANDISES EN VRAC COMPOSÉES DES PIÈCES INDIVIDUELLES

(30) Priorität: 22.03.2019 DE 102019203966
(43) Veröffentlichungstag der Anmeldung: 23.09.2020
(73) Patentinhaber: Richard Bergner Holding GmbH & Co. KG, 91126 Schwabach (DE); IPM Industrieprodukte Meißner GmbH, 97499 Donnersdorf (DE)
(72) Erfinder: PEIPP, Manfred, 91189 Rohr - Dechendorf (DE); MEISSNER, Andreas, 97522 Sand (DE)
(74) Vertreter: FDST Patentanwälte

(56) Entgegenhaltungen:
- EP-A1- 1 535 522
- DE-A1- 4 311 082
- DE-C- 725 591
- US-A- 5 353 911

## Beschreibung

Die Erfindung betrifft eine Fördervorrichtung sowie ein Verfahren zur Förderung von aus Einzelteilen bestehendem Schüttgut.

Bei der Fertigung von Einzelteilen, nachfolgend auch als Bauteile bezeichnet, ist es häufig erforderlich, dass diese mehrere Fertigungsstufen bis zum gewünschten Endprodukt durchlaufen. Beispiele für derartige Einzelteile oder Bauteile sind insbesondere Verbindungselemente, wie beispielsweise Schrauben, Nieten, Nägel, Muttern etc. Darüber hinaus werden nachfolgend unter "Einzelteilen" jedoch auch andere, insbesondere kleinteilige Bauteile verstanden, die im Rahmen eines Fertigungsprozesses bearbeitet und geformt werden.

Bei der Fertigung durchlaufen diese Bauteile mehrere Fertigungsstufen und müssen zwischen den einzelnen Fertigungsstufen weiter gefördert werden. Dies geschieht beispielsweise mit Fördervorrichtungen. Bei kleinteiligen Bauteilen erfolgt typischerweise eine Sammlung einer Vielzahl dieser Bauteile nach Art eines Schüttguts, die dann gemeinsam in einem beispielsweise offenen Behälter gesammelt und weiter gefördert werden. Die einzelnen Bauteile werden daher in den Behältern chargenweise weiter transportiert. Derartige Behälter werden zwischen zwei Fertigungsbereichen beispielsweise mittels eines Bandförderers transportiert. Häufig werden die von einer Fertigungsmaschine bearbeiteten Bauteilen Fertigungsmaschine kontinuierlich von einer der Fertigungsmaschine nachgelagerten Fördervorrichtung aufgenommen und weiter transportiert, beispielsweise zu einem nachgelagerten Sammelbehälter oder auch zu einer nachgelagerten Fertigungsmaschine.

Weiterhin ist üblicherweise eine regelmäßige Qualitätskontrolle der zwischengefertigten sowie auch endgefertigten Bauteile speziell im Rahmen von Stichproben vorgesehen.

Sobald im Rahmen einer derartigen Stichprobe fehlerhafte Bauteile, nachfolgend auch als Ausschussteile bezeichnet, ermittelt werden, wird üblicherweise die gesamte Charge sowie gegebenenfalls auch Vorläufer-Chargen bis zu einer letzten "in-Ordnung"-Kontrolle als Ausschuss behandelt.

Zum Fördern von Schüttgut in Bergwerken ist aus der DE 725 591 C eine Fördervorrichtung besonders für den Untertagebetrieb in Form eines Becherwerkes mit Entladung in eine Schrägstrecke zu entnehmen, wobei eine Rutsche an die zu entladenden Becher herangeführt werden kann, gemäß dem Oberbegriff von Anspruch 1.

Aus der DE 43 11 082 A1 ist ein Schiffsent- oder belader zu entnehmen mit einem Ausleger, an dessem freien Ende ein Becherwerk angeordnet ist, das in einem oberen Umlenkbereich Schüttgut über eine einstellbare Schurre auf ein nachgeschaltetes Fördermittel übergibt.

Die EP 1 535 522 A1 beschreibt eine Rutscheinrichtung für einen Tabakzwischenspeicher.

Aus der US 5 353 911 A ist eine Einrichtung zum Überwachen der Förderung von Schüttgut in einer Schüttgut-Fördervorrichtung zu entnehmen.

Ausgehend hiervon liegt der Erfindung die Aufgabe zugrunde, eine Fördervorrichtung sowie ein Verfahren zur Förderung von aus Einzelteilen bestehendem Schüttgut anzugeben, wobei ein einfaches Aussortieren von Ausschussteilen ermöglicht ist.

Die Aufgabe wird gemäß der Erfindung gemäß Anspruch 1 gelöst durch eine Fördervorrichtung zur Förderung von aus Einzelteilen bestehendem Schüttgut, welches in einer Fördervorrichtung gefördert wird. Die Fördervorrichtung weist dabei einen umlaufenden Förderstrang auf, der sich in einer Förderrichtung von einem befüllseitigen, unteren Umlenkbereich bis zu einem auswurfseitigen, oberen Umlenkbereich erstreckt.

Die Fördervorrichtung ist dabei vorzugsweise schräg um einen Steigungswinkel α gegenüber der Horizontalen orientiert. Grundsätzlich ist auch eine horizontale Förderung möglich. Die Fördervorrichtung weist weiterhin mehrere Behälter auf, die insbesondere als Wannen oder Körbe ausgebildet sind und typischerweise einen Boden sowie eine umlaufende Seitenwand aufweisen. Diese Behälter sind an dem umlaufenden Förderstrang befestigt, und zwar derart, dass sie an den Umlenkbereichen jeweils insbesondere um 180° umgedreht werden. Sie werden also kontinuierlich nach Art eines Bandförderers transportiert. Bei dem Förderstrang handelt es sich beispielsweise um ein umlaufendes Band, einen umlaufenden Riemen oder auch um eine umlaufende Kette. Der Förderstrang zusammen mit den daran befestigten Behältern wird nachfolgend auch als Fördereinheit bezeichnet.

Die Fördervorrichtung weist im auswurfseitigen Umlenkbereich einen Auswurfbereich auf, in dem das in den einzelnen Behältern befindliche Schüttgut automatisch durch das Umdrehen des Behälters im Umlenkbereich ausgeschüttet wird. Um das Aussortieren von Ausschussteilen in einfacher Weise zu ermöglichen weist die Fördervorrichtung weiterhin eine Rutsche für derartige Ausschussteile auf, wobei die Rutsche in den Auswurfbereich einfahrbar ist. Damit gelangt die Rutsche in einen Fallweg der Einzelteile, wenn diese im Auswurfbereich aus den einzelnen Behältern chargenweise herausfallen.

Durch die Anordnung der verfahrbaren Rutsche kann daher in einfacher Weise der Inhalt eines als Ausschuss gekennzeichneten Behälters von den weiteren Chargen / Einzelteilen getrennt werden, ohne dass der typischerweise kontinuierliche oder getaktete Förderprozess unterbrochen werden muss.

Bei den Einzelteilen handelt es sich insbesondere um kleinteilige Bauteile, speziell um Verbindungselemente, wie beispielsweise Schrauben, Nieten, Muttern. In den Behältern werden diese Einzelteile chargenweise transportiert, wobei in einem Behälter zumindest ein Einzelteil, vorzugsweise jedoch eine Vielzahl von Einzelteilen als Charge aufgenommen werden. Die Anzahl der Einzelteile pro Charge hängt insbesondere auch von der Größe der Einzelteile und / oder von einer Taktzahl einer Maschine im Produktionsprozess ab. Speziell werden beispielsweise 10 bis 50, 50 bis 100, 100 bis 250, 250 bis 500, 500 bis 1.000 oder gegebenenfalls auch mehr Einzelteile (bei kleinen Teilen wie z.B. Muttern können es auch 3000 Teile und mehr sein) in einem jeweiligen Behälter als Charge gesammelt und weiter transportiert.

Bei einem schräg zur horizontal orientierten Förderstrang werden die einzelnen Chargen von einem unteren zu einem oberen, auf einem höheren Niveau gelegenen Ende getaktet transportiert und dort ausgeschüttet. Dies führt in Produktionsanlagen zu einer besonders kompakten Platz sparenden Anordnung und Förderung der einzelnen Teile.

In bevorzugter Ausgestaltung ist die Rutsche unterhalb des Förderstrangs in Richtung der Förderrichtung verlaufend und insbesondere parallel zum Förderstrang verlaufend angeordnet. Aufgrund der Anordnung der Behälter an dem Förderband ist die Rutsche daher unterhalb der an der Unterseite des Förderbands rücklaufenden Behälter angeordnet. Bevorzugt ist die Rutsche dabei unmittelbar angrenzend unterhalb dieser rücklaufenden Behälter angeordnet und weist zu diesen beispielsweise lediglich einen Abstand von wenigen Zentimetern, beispielsweise von 0 bis 10 oder 0 bis 20 cm auf. Die Breite der Rutsche ist dabei vorzugsweise an die Breite der Behälter angepasst. Hierunter wird verstanden, dass die Breite der Rutsche (zumindest) der Breite der Behälter entspricht oder auch darüber liegt (z.B. +10% oder +20% oder +30%)

Unter "in Richtung der Förderrichtung verlaufend angeordnet" wird vorliegend verstanden, dass die Rutsche parallel zu einer Richtung verläuft, die sich durch eine Projektion der Förderrichtung auf einer Horizontalebene ergibt. Vorzugsweise verläuft die Rutsche dabei streng parallel zum Förderstrang, weist daher also vorzugsweise auch den gleichen Neigungswinkel bezüglich einer Horizontalebene auf wie der Förderstrang selbst. Alternativ hierzu kann die Rutsche auch unterschiedlich zum Förderstrang gegenüber der Horizontalen geneigt sein und beispielsweise eine um bis zu 5°, um 5 bis 10°, oder eine um 10 bis 20° unterschiedliche, insbesondere stärkere Neigung als der Förderstrang aufweisen.

In zweckdienlicher Ausgestaltung ist die Rutsche teleskopartig ausfahrbar. Sie weist daher zumindest zwei und bevorzugt genau zwei teleskopartig miteinander verbundene Teilbereiche auf, nämlich einen oberen zum auswurfseitigen Umlenkbereich orientierten Teilbereich und einen unteren Teilbereich. Insbesondere ist der untere Teilbereich ortsfest fixiert und lediglich der obere Teilbereich ist ausfahrbar, sodass die Rutsche bei Bedarf in Richtung zum auswurfseitigen Umlenkbereich ausfahrbar ist. Der untere Teilbereich der Rutsche weist typischerweise einen Auswurfbereich, insbesondere einen Auswurfschacht auf, über den die Einzelteile die Rutsche wieder verlassen.

In bevorzugter Weiterbildung weist die Rutsche ein oberes Auffangende auf, welches zum auswurfseitigen Umlenkbereich der Fördereinheit orientiert ist. Das Auffangende weist in bevorzugter Ausgestaltung gegenläufige Führungsbereiche auf, nämlich einen ersten Führungsbereich für Ausschussteile und einen zweiten Führungsbereich für Gutteile. Je nach Position der Rutsche ist der erste Führungsbereich oder der zweite Führungsbereich unterhalb des auswurfseitigen Umlenkbereichs positioniert.

Durch diese spezielle Ausgestaltung des oberen Auffangendes wird also mittels der Rutsche selbst in Abhängigkeit ihrer jeweiligen Position eine zuverlässige und sichere Führung und Trennung der Gutteile und der Ausschussteile ermöglicht.

Speziell weist die Rutsche zwei Endstellungen auf, nämlich eine eingezogene, rückgefahrende Position, bei der der zweite Führungsbereich für die Gutteile unterhalb des auswurfseitigen Umlenkbereichs angeordnet ist sowie eine zweite, ausgefahrene Endstellung, bei der der erste Führungsbereich für die Ausschussteile unterhalb des auswurfseitigen Umlenkbereichs positioniert ist.

Unter "gegenläufige Führungsbereiche" wird allgemein verstanden, dass diese beiden Bereiche sich aneinander anschließen. Speziell weisen diese beiden Führungsbereiche jeweils Rutschenabschnitte für die Einzelteile auf. Bevorzugt sind diese Rutschenabschnitte durch ein quer verlaufendes Trennelement getrennt, sodass die Einzelteile nicht von dem einem Führungsbereich in den anderen Führungsbereich gelangen können.

In bevorzugter Weiterbildung sind die beiden Führungsbereiche darüber hinaus auch winklig zueinander angeordnet. Hierdurch wird sichergestellt, dass Ausschussteile und Gutteile in unterschiedliche Richtungen zuverlässig abgeführt werden. Die beiden Führungsbereiche sind dabei beispielsweise unter einem Knickwinkel angeordnet, welcher vorzugsweise im Bereich zwischen 90° (rechtwinklige Anordnung) bis 150° reicht. Vorzugsweise wird ein Knickwinkel im Bereich zwischen 100° und 125° gewählt.

In zweckdienlicher Ausgestaltung ist der zweite Führungsbereich allgemein - auch unabhängig von der winkligen Anordnung - nach Art eines Trichters ausgebildet. Er weist hierzu also insbesondere aufeinander zulaufende Seitenwände auf. Über diesen Trichter werden die Gutteile mittels der Rutsche einer nachfolgenden Einheit zugeführt. Bei dieser nachfolgenden Einheit handelt es sich insbesondere um einen Sammeltrichter, einen Sammel- oder Transportbehälter zur Zwischenlagerung der Gutteile, einer Zuführeinheit einer nachfolgenden Fertigungsmaschine oder auch um eine weitere Fördereinrichtung.

In bevorzugter Ausgestaltung ist unterhalb des auswurfseitigen Umlenkbereichs und insbesondere auch unterhalb des Auffangtrichters der bereits erwähnte Sammel- oder Transportbehälter für Gutteile angeordnet.

Allgemein ist unterhalb des auswurfseitigen Umlenkbereichs - und bei entsprechender Positionierung der Rutsche auch unterhalb des zweiten Führungsbereichs - ein zusätzlicher Auffangtrichter angeordnet. Bei diesem kann es sich um den zuvor erwählten Sammeltrichter handeln, der zur Zuführung der Gutteile entweder zum Sammelbehälter oder auch zu einer weiteren Zuführung / Förderrichtung dient. Bevorzugt ist unterhalb des Auffangtrichters der Sammelbehälter angeordnet. Der zweite Führungsbereich und/ der zusätzliche Auffangtrichter sind beispielsweise mit Dämm- und / oder Prallschutzmaßnahmen versehen, z.B. mit entsprechenden Elementen z.B. aus Kunststoff versehen und ausgekleidet. Typischerweise bestehen die einzelnen Elemente der Fördervorrichtung aus Metall (Blech).

Um eine Beschädigung der Oberfläche der Gutteile beim Zuführen der Einzelteile in den Sammelbehälter zu vermeiden, ist in bevorzugter Weiterbildung zur Zuführung der Gutteile zum Sammelbehälter - allgemein und auch unabhängig von dessen bevorzugter Positionierung unterhalb des Umlenkbereichs - ein wendelförmig verlaufendes Führungselement für die Gutteile angeordnet. Hierbei handelt es sich insbesondere um einen umlaufend geschlossenen Kanal, beispielsweise ein Rohr, in dem die Gutteile geführt werden.

In zweckdienlicher Weiterbildung führt die Rutsche mit ihrem unteren Ende zu einem Ausschuss-Sammelbehälter für die Ausschussteile. Dieser ist insbesondere unterhalb des Förderstrangs angeordnet. Weiterhin ist dieser Ausschuss-Sammelbehälter vorzugsweise mit einer Abdeckung versehen, sodass ein Herausfallen oder auch Herausspringen von einzelnen Einzelteilen aus dem Ausschussbehälter vermieden ist.

In bevorzugter Ausgestaltung sind daher sowohl der Sammelbehälter für die Gutteile als auch der Ausschuss-Sammelbehälter für die Ausschussteile Platz sparend unterhalb des Förderstrangs angeordnet, sodass insgesamt eine sehr kompakte Ausgestaltung der gesamten Fördervorrichtung erreicht ist.

Werden im Rahmen einer Stichprobe Ausschussteile identifiziert, so ist es entscheidend, dass sämtliche Einzelteile einer Charge, die als Ausschuss identifiziert wurden, auch tatsächlich aussortiert werden und nicht etwa in einem Behälter hängen bleiben oder anderweitig wieder einer Charge von Gutteilen zugeführt werden. Um dies zuverlässig zu erzielen, sind unterschiedliche Maßnahmen vorgesehen, die nachfolgend näher erläutert werden.

Zum einen weist die Rutsche in bevorzugter Ausgestaltung eine obere, zum Förderstrang orientierte Abdeckung auf, die vorzugsweise vollständig - bis auf den Bereich des oberen Auffangendes der Rutsche - die Rutsche abdeckt, sodass also aus der Rutsche keine Ausschussteile herausspringen können. Die Rutsche ist daher zumindest in einem Teilbereich insgesamt nach Art eines umlaufend geschlossenen Schachts ausgebildet.

Weiterhin ist in zweckdienlicher Weiterbildung im auswurfseitigen Umlenkbereich eine Auswurfhilfe angeordnet, die das Entleeren des jeweiligen Behälters unterstützt. Im Normalfall wird ein jeweiliger Behälter am auswurfseitigen Umlenkbereich durch das Umlenken um 180° gekippt, sodass die Einzelteile aus dem jeweiligen Behälter herausfallen können. Unter gewissen Umständen, beispielsweise bei Verwendung von Betriebsflüssigkeiten wie Schmiermittel, Öl etc., und insbesondere bei sehr kleinteiligen Einzelteilen besteht jedoch die Gefahr, dass diese dennoch am Behälter haften bleiben. Durch die Auswurfhilfe ist nunmehr sichergestellt, dass sämtliche Einzelteile aus dem Behälter herausfallen.

Bei der Auswurfhilfe handelt es sich dabei insbesondere um eine Ausblasvorrichtung. Der Behälter wird also mittels eines Druckgases / Druckluft ausgeblasen, sodass evtl. darin haftende Einzelteile aus diesem herausfallen. Grundsätzlich sind auch andere Auswurfhilfen möglich, wie beispielsweise eine Rüttelstrecke im Umlenkbereich, sodass also der Behälter im Umlenkbereich vibriert und durch diese Vibrationen die Einzelteile herausfallen. Darüber hinaus können auch mechanische Abstreifelemente vorgesehen sein.

Da bei vielen Fertigungsprozessen die Verwendung von flüssigen Betriebsmitteln, wie Kühl- oder Schmierstoffe erforderlich ist, die an den Einzelteilen haften, ist in einer zweckdienlichen Weiterbildung weiterhin vorgesehen, dass die Behälter Öffnungen zum Abtropfen einer Flüssigkeit aufweisen. Derartige Öffnungen sind insbesondere durch ein Gitter oder ein Lochblech gebildet. Bei den Behältern kann es sich daher um Gitterbehälter oder auch um Behälter aus Lochblechen handeln.

Im auswurfseitigen Umlenkbereich werden die Einzelteile über eine vordere Seitenwand aus dem Behälter herausgekippt. Zweckdienlicherweise weist diese vordere Seitenwand eine strukturierte Oberfläche auf und ist insbesondere aus Riffelblech oder als genopptes Blech ausgebildet. Durch diese Ausgestaltung reduziert sich die Haftung zwischen der Seitenwand und dem jeweiligen Einzelteil, sodass auch hierdurch ein zuverlässiges Ausschütten der Einzelteile aus dem Behälter unterstützt wird. Die übrigen Seitenwände, zumindest insbesondere der Boden und eine rückwärtige Seitenwand sind dabei mit den Öffnungen versehen und beispielsweise als Gitter oder Lochblech ausgebildet.

Typischerweise werden die einzelnen Behälter sukzessive befüllt, wobei immer einer der unteren Behälter nahe des befüllseitigen Umlenkbereichs mit den Einzelteilen befüllt wird. Der Behälter wird beispielsweise über eine Zuführeinheit einer Fertigungsmaschine, beispielsweise durch deren Auswurfschacht, insbesondere kontinuierlich befüllt.

Um eine zuverlässige Aufnahme aller Einzelteile in die unterschiedlichen Behälter zu gewährleisten ist in zweckdienlicher Ausgestaltung vorgesehen, dass die einzelnen Behälter in Förderrichtung unmittelbar aneinander angrenzend angeordnet sind. Zwischen den Behältern sind daher vorzugsweise lediglich Toleranzfreiräume oder sie liegen unmittelbar aneinander an; zumindest ist gewährleistet, dass zwischen zwei aufeinander folgenden Behältern kein freier Zwischenraum besteht.

Um dies zu gewährleisten, weisen die Behälter jeweils an einer Seitenwand eine Querleiste auf, die insbesondere nach Art einer umgebogenen Blechsicke ausgebildet ist. Diese Querleiste überdeckt dabei jeweils eine Seitenwand eines benachbarten Behälters. Vorzugsweise ist die Querleiste an einer in Förderrichtung betrachteten vorderen Seitenwand angeordnet, sodass eine hintere Seitenwand des in Förderrichtung vorauslaufenden Behälters überdeckt ist.

Bei derartigen Fördervorrichtungen dauert es häufig mehrere 10 Minuten oder auch mehrere halbe Stunden bis zu wenigen Stunden, bis eine Charge, also ein voll beladener Behälter von dem unteren, befüllseitigen Umlenkbereich bzw. von der Befüllposition des jeweiligen Behälters bis zum oberen, auswurfseitigen Umlenkbereich gefördert wird, wo der Behälter wieder entleert wird. Die Förderung erfolgt dabei typischerweise getaktet, bis also ein jeweiliger Behälter "voll" ist. Dies ist üblicherweise bei Erreichen einer genau vordefinierbaren Anzahl an Einzelteilen in einem jeweiligen Behälter der Fall. Sobald der Behälter voll ist, wird der nachfolgende Behälter an die Befüllposition verfahren. Je nach Prozessgeschwindigkeit beispielsweise der vorgelagerten Fertigungsstufe und/oder der Anzahl und/oder der Größe der Einzelteile pro Behälter kann die Befüllung eines jeweiligen Behälters unterschiedlich lang dauern. Je nach Förderstrecke der Fördervorrichtung, also der Förderlänge zwischen den beiden Umlenkbereichen, sind typischerweise mehrere Behälter zwischen den beiden Umlenkbereichen angeordnet. Üblicherweise sind beispielsweise zumindest 10, und beispielsweise 10 bis 40, und insbesondere beispielsweise 15 bis 25 Behälter zwischen den beiden Umlenkbereichen angeordnet. Die Gesamtzahl der an dem Förderstrang befestigten Behälter beträgt dann etwa das Doppelte.

Die Einzelteile verweilen daher eine geraume Zeit in dieser Fördervorrichtung. Die gesamte Fördervorrichtung wird daher auch als Teilespeicher bezeichnet.

Während der Verweildauer in der Fördervorrichtung werden typischerweise wiederkehrend Qualitätskontrollen, insbesondere im Rahmen von Stichproben, vorgenommen. Zudem tropft während der Verweildauer auch an den Teilen anhaftende Hilfsstoffe (Schmiermittel, Öl...) von den Einzelteilen ab und wird gesammelt und ggf. wieder zurück zur Produktionsmaschine geführt.

Generell ist dabei vorgesehen, dass bei der Identifizierung eines Ausschussteils einer Charge (eines Behälters) die gesamte Charge als Ausschuss gekennzeichnet wird, also alle Einzelteile, die sich im Behälter befinden. Der Inhalt eines jeweiligen als Ausschuss gekennzeichneten Behälters - nachfolgend als Ausschussbehälter bezeichnet - muss daher zuverlässig den Ausschussteilen und beispielsweise dem Ausschussbehälter zugeführt werden.

Um dies mit möglichst geringem Aufwand mit gleichzeitig hoher Zuverlässigkeit zu gewährleisten weist die Fördervorrichtung eine geeignet ausgebildete Steuereinheit auf, die den Betrieb der Fördervorrichtung steuert. Die Steuereinheit ist derart ausgebildet, dass die Rutsche automatisch in den Auswurfbereich verfahren wird, wenn ein Behälter den oberen Umkehrbereich erreicht, welcher als ein Ausschussbehälter identifiziert wurde.

Die Fördervorrichtung weist bevorzugt eine insbesondere elektronische Erkennungseinheit oder Markierungseinheit zum Identifizieren und/oder Markieren eines Behälters als Ausschussbehälter auf. Sobald dieser Ausschussbehälter den auswurfseitigen Umlenkbereich erreicht, bevor also dieser Behälter ausgekippt wird, veranlasst die Steuereinrichtung, dass die Rutsche automatisch ausgefahren wird. Sobald daher der Ausschussbehälter entleert wird, werden zuverlässig die Ausschussteile von der Rutsche aufgefangen und insbesondere dem Ausschussbehälter zugeführt. Eine manuelle Interaktion und Überwachung ist daher nicht mehr erforderlich.

Im Hinblick auf eine möglichst einfache Bedienung weist die Steuereinheit insgesamt eine Eingabeeinheit auf, über die ein Behälter als Ausschussbehälter oder als Gutteile-Behälter markiert werden kann. Hierzu steht beispielsweise einem Benutzer eine Eingabemaske zur Verfügung. Die Eingabe kann in gewohnter Weise über Eingabemittel, wie Tastatur, Maus oder auch Touchscreen erfolgen. Zweckdienlicherweise ist hierbei eine bildgeführte Markierung ermöglicht, bei der die einzelnen Behälter auf einem Display, insbesondere dem Touchscreen durch Symbole dargestellt werden und die dann durch eine Berührung / Markierung der entsprechenden Symbole als Gutteil-Behälter oder als Ausschussbehälter identifiziert werden können. Die Identifizierung der einzelnen Behälter erfolgt beispielsweise durch eine gleichlautende Kennzeichnung (Nummerierung, Buchstaben) an den realen Behältern einerseits und an den bildhaften Symbolen für die Behälter in dem Display andererseits. Alternativ erfolgt die Identifizierung Positionsabhängig, d.h. die Steuerung merkt sich die jeweilige Position des interessierenden Behälters und führt diese Position nach dem nächsten Prozesstakt (eine Stufe weiter) nach.

Häufig werden nicht alle Behälter einer Stichprobe unterzogen. Um sicherzustellen, dass keine Ausschussteile den Gutteilen zugeordnet werden, veranlasst die Steuereinheit weiterhin, dass nach einer Markierung oder Identifizierung eines Behälters als Ausschussbehälter automatisch sämtliche in Förderrichtung vorlaufende Behälter bis zum nächsten als Gutteile-Behälter identifizierten / markierten Behälter als Ausschussbehälter markiert werden.

Hierdurch wird dann sichergestellt, dass sämtliche auf diese Weise automatisch markierten Ausschussbehälter den Ausschussteilen beispielsweise im Ausschuss-Sammelbehälter zugeführt werden.

Ergänzend ist die Steuereinheit derart ausgebildet, dass ein insbesondere automatisch als Ausschussbehälter markierter Behälter manuell vom Bediener wieder als Gutteil-Behälter markiert wird. Insbesondere bei automatisch als Ausschussbehälter markierten Behältern ist dies von Vorteil, um die Anzahl der Ausschussteile möglichst gering zu halten. Erkennt der Benutzer beispielsweise, dass weitere vorlaufende Behälter zu dem von ihm als Ausschussbehälter markierten Behälter von der Steuereinheit automatisch als Ausschussbehälter markiert sind, so kann er bei diesen Behältern ebenfalls Stichproben durchführen und bei entsprechend erfolgreicher Qualitätskontrolle diese dann als Gutteile-Behälter markieren. Die Erfindung wird weiterhin gelöst durch ein Verfahren mit den Merkmalen des Anspruchs 14.

Die im Hinblick auf die Fördervorrichtung angeführten Vorteile und bevorzugten Ausgestaltungen sind sinngemäß auch auf das Verfahren zu übertragen.

Ausführungsbeispiele werden nachfolgend anhand der Figuren näher erläutert. Diese zeigen teilweise in vereinfachten Darstellungen:
- Fig. 1: eine Seitenansicht einer Fördervorrichtung,
- Fig. 2: eine Schnittansicht durch die Fördervorrichtung gemäß Fig. 1,
- Fig. 3: eine vergrößerte ausschnittsweise Darstellung der Fig. 2,
- Fig. 4: eine ausschnittsweise Darstellung der Fördervorrichtung mit eingezogener Rutsche,
- Fig. 5: eine Seitenansicht eines Teilbereichs einer Rutsche,
- Fig. 6: eine Aufsicht auf den Teilbereich der Rutsche gemäß Fig. 4 sowie
- Fig. 7: eine Darstellung eines Display einer Steuereinheit.

In den Figuren sind gleich wirkende Teile mit den gleichen Bezugszeichen versehen.

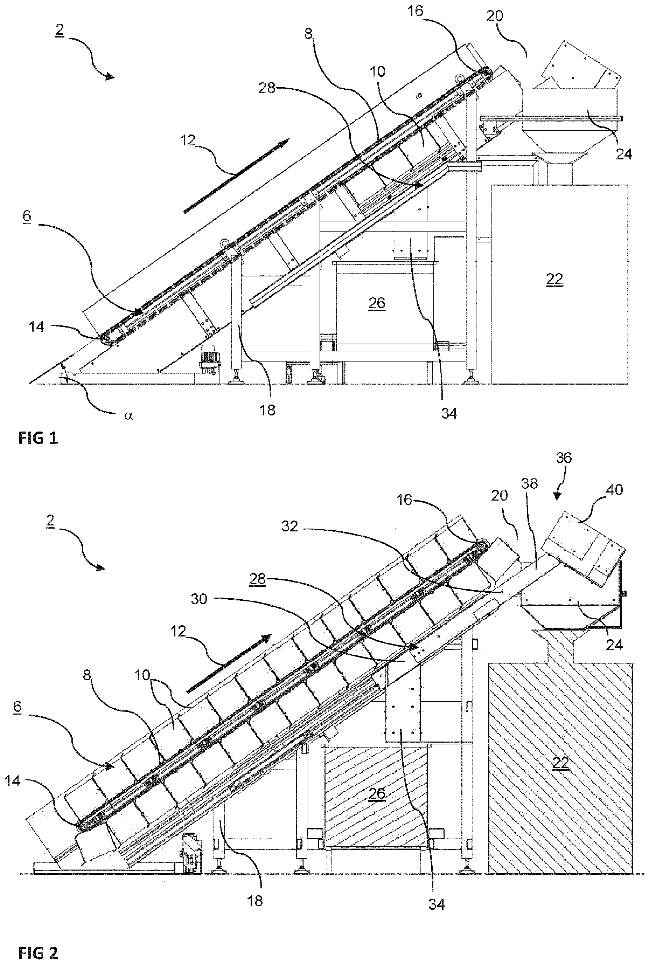

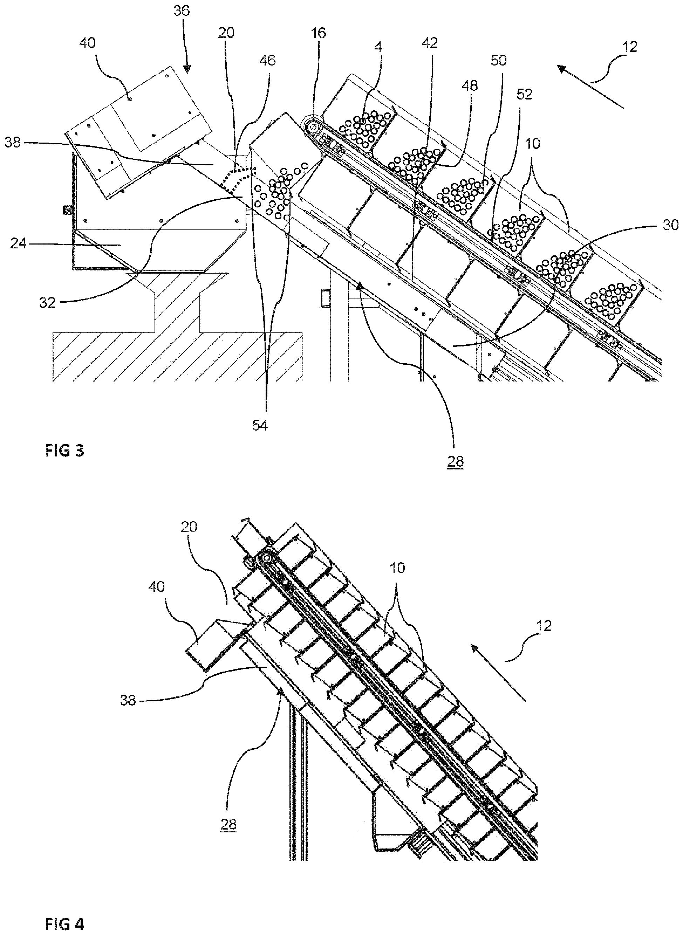

Eine Fördervorrichtung 2 zur Förderung von aus Einzelteilen 4 (vgl. hierzu Fig. 3) bestehendem Schüttgut ist in den Fig. 1 bis 4 dargestellt. Die Fördervorrichtung 2 weist eine Fördereinheit 6 auf, die einen umlaufenden Förderstrang 8 sowie darauf angebrachte Behälter 10 aufweist. Die Fördereinheit 6 und damit der Förderstrang 8 erstreckt sich in Förderrichtung 12 von einem unteren, befüllseitigen Umlenkbereich 14 bis zu einem oberen, auswurfseitigen Umlenkbereich 16. Eine Förderlänge, also der Abstand zwischen den beiden Umlenkbereichen 14,16, beträgt dabei typischerweise mehrere Meter, beispielsweise 2 bis 10 m. Die üblicherweise quaderförmigen Behälter 10 weisen in Förderrichtung eine Tiefe sowie senkrecht hierzu eine Höhe auf, die typischerweise mehrere 10 cm beträgt, beispielsweise 20 bis 40 cm. Weiterhin weisen die Behälter 10 eine Breite quer zur Förderrichtung 12 auf, die beispielsweise im Bereich zwischen 30 und 80 cm und speziell beispielsweise bei 40 cm liegt. Die Fördereinheit 6 ist auf einem Gestell 18 mit mehreren Stützen angeordnet. Die Förderrichtung 12 und damit die Fördereinheit 6 ist gegenüber einer Horizontalen um einen Winkel α geneigt, der beispielsweise im Bereich zwischen 30° und 50° liegt.

Mittels der Fördereinheit 6 werden die einzelnen Behälter 10, die jeweils an dem Förderstrang 8 befestigt sind, umlaufend zwischen den beiden Umlaufbereichen 14,16 gefördert. Der Förderstrang 8, der beispielsweise als ein Förderband ausgebildet ist, wird hierbei typischerweise über Umlenkrollen geführt, von denen beispielsweise zumindest eine als eine Antriebsrolle ausgebildet ist.

Am oberen auswurfseitigen Umlenkbereich 16 ist allgemein ein Auswurfbereich 20 ausgebildet, in dem die Einzelteile 4 eines jeweiligen Behälters 10 aus diesem ausgeleert werden und nach unten herausfallen. Unterhalb des oberen Umlenkbereichs 16 ist ein Sammelbehälter 22 für Gutteile angeordnet, also für solche Teile, die den (Qualitäts-) Anforderungen genügen. Die Zuführung zu diesem Sammelbehälter 22 erfolgt dabei im Ausführungsbeispiel über einen Auffangtrichter 24.

Die gesamte Fördervorrichtung 2 dient zum Trennen von Ausschussteilen von den Gutteilen. Ergänzend zum Sammelbehälter 22 ist weiterhin noch ein Ausschuss-Sammelbehälter 26 vorgesehen. Dieser ist ebenfalls unterhalb der Fördereinheit 6 Platz sparend angeordnet. Beide Behälter 22,26 stehen dabei vorzugsweise seitlich nicht über das Gestell 18 über, weisen also vorzugsweise eine Breite auf, die nicht größer als die Breite der Fördereinheit 6 ist. Insgesamt ist hierdurch ein kompakter Aufbau ausgebildet.

Zur Trennung der Ausschussteile von den Gutteilen weist die Fördervorrichtung 2 eine Rutsche 28 auf. Diese ist im Ausführungsbeispiel unmittelbar unterhalb der Fördereinheit 6, also unmittelbar unterhalb der an der Unterseite des Förderstrangs 8 rücklaufenden Behälter 10 angeordnet. Die Rutsche 28 ist insbesondere in den Schnittdarstellungen der Fig. 2 , 3 und 4 gut zu erkennen.

Die Rutsche 28 ist insgesamt nach Art eines Teleskops ausgebildet und weist einen unteren Teilbereich 30 sowie einen zum oberen Umlenkbereich 16 orientierten oberen Teilbereich 32 auf. Der untere Teilbereich 30 ist ortsfest angeordnet und der obere Teilbereich 30 relativ zum unteren Teilbereich 30 in Förderrichtung 12 ein- und ausfahrbar.

Hierzu ist ein geeigneter Antrieb vorgesehen. Allgemein weist die Rutsche 28 an ihrem unteren Ende ein Auswurfende auf, über das die Ausschussteile die Rutsche 28 verlassen und insbesondere in den Ausschuss- Sammelbehälter 26 geführt werden. Am Auswurfende ist hierzu beispielsweise ein insbesondere vertikal orientierter Fallschacht 34 angeordnet.

Gegenüberliegend zum Auswurfende weist die Rutsche 28 ein oberes Auffangende 36 auf, welches zur Aufnahme des aus den Behältern 10 ausgeworfenen Schüttgutes dient.

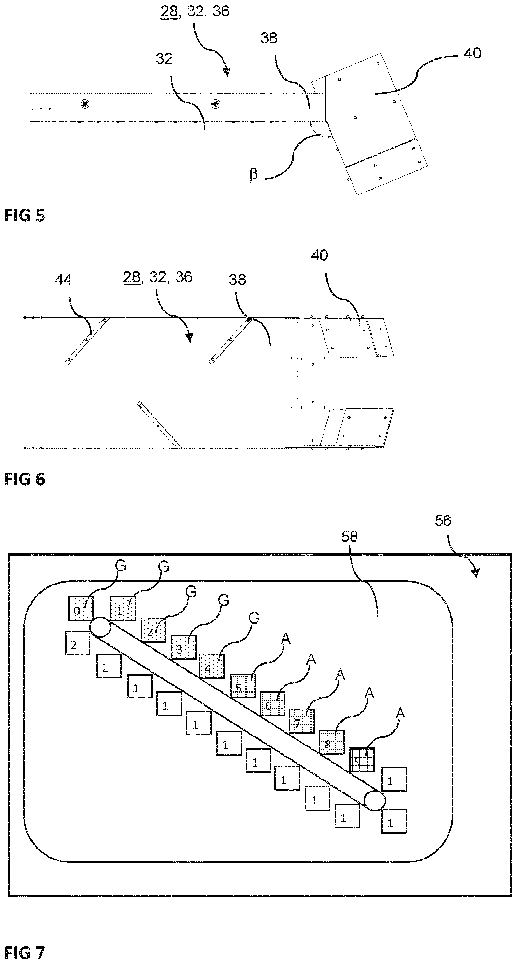

Der obere Teilbereich 30 der Rutsche 28 ist in den Fig. 5 und 6 näher dargestellt. Wie insbesondere hieraus, aber auch anhand der Fig. 2 bis 4, zu erkennen ist, weist die Rutsche 28 im Bereich des oberen Auffangendes 36 einen ersten Führungsbereich 38 für Ausschussteile und einen zweiten Führungsbereich 40 für Gutteile auf. Bei diesen beiden Führungsbereichen 38,40 handelt es sich jeweils um Rutschenbereiche, die aneinander angrenzen. Diese beiden Führungsbereiche 38,40 schließen sich dabei winklig aneinander an. Zwischen ihnen ist ein Knickwinkel β ausgebildet (vgl. hierzu Fig. 5), der vorzugsweise im Bereich zwischen 90° und 125° und im Ausführungsbeispiel der Fig. 5 bei 112,5° liegt. Der zweite Führungsbereich 40 für die Gutteile ist weiterhin - wie insbesondere anhand der Fig. 6 zu erkennen ist - nach Art eines Trichters ausgebildet, dessen Seitenwände sich nach unten hin verjüngen.

Die Rutsche 28 wird je nach Bedarf ein- bzw. ausgefahren. Die Fig. 1-3 zeigen dabei eine Situation, bei der die Rutsche 28 ausgefahren ist und Fig. 4 eine Situation, bei der die Rutsche eingefahren ist. Zweckdienlicherweise wird sie, speziell der obere Teilbereich 32 dabei zwischen einer eingefahrenen, rückwärtigen sowie einer ausgefahrenen Endstellung hin und her verschoben. In der ausgeschobenen Position (vgl. insbesondere Fig. 2 und Fig. 3) ist das erste Führungselement 38 im Auswurfbereich 20 und damit unterhalb des oberen Umlenkbereichs 16 angeordnet. Aus dem jeweiligen Behälter 10 herausfallendes Schüttgut trifft daher auf den ersten Führungsbereich 38 auf und rutscht anschließend in Richtung zum Ausschuss-Sammelbehälter 26 entgegen der Förderrichtung 12 ab.

Sollen die Einzelteile 4 eines Behälters 10 als Gutteile behandelt und dem Sammelbehälter 22 zugeführt werden, so wird die Rutsche 28 nach unten eingezogen, sodass der zweite Führungsbereich 40 im Auswurfbereich 20 und unterhalb des oberen Umlenkbereichs 16 angeordnet ist (vgl. hierzu Fig. 4). In diesem Fall werden dann die Einzelteile 4 vom zweiten Führungsbereich 40 aufgenommen und über den Auffangtrichter 24 dem Sammelbehälter 20 zugeführt.

Die Rutsche 28, insbesondere der Teilbereich ausgehend vom ersten Führungsbereich 38 für die Ausschussteile entgegen der Förderrichtung 12, ist im Querschnitt betrachtet wannenförmig oder auch als geschlossener Kanal ausgeführt. Sie weist allgemein eine Abdeckung 42 auf, die die Rutsche 38 zur Fördereinheit 6, also zu den rücklaufenden Behältern 10 abdeckt. Lediglich im Bereich des ersten Führungsbereichs 38, der zur Aufnahme der aus den Behältern 10 herausfallenden Einzelteile 4 ausgebildet ist, ist die Abdeckung 42 nicht ausgebildet. Zweckdienlicherweise ist diese Abdeckung 42 feststehend beispielsweise mit dem unteren Teilbereich 30 verbunden.

Bei der Rutsche 28 handelt es sich um ein Bauteil aus Metall oder Kunststoff. Um ein Gleiten der Einzelteile 4 möglichst problemlos zu ermöglichen ist die Oberfläche der Rutsche geeignet ausgebildet, beispielsweise genoppt oder geriffelt.

Wie aus der Aufsicht der Fig. 6 zu erkennen ist, können auf dem Boden der Rutsche 28 noch weitere Leitelemente 44 angeordnet sein, die beispielsweise nach Art von schräg auf dem Boden montierten Leisten ausgebildet sind. Aktive Mittel zum Fördern der Einzelteile 4 sind im Ausführungsbeispiel nicht vorgesehen. Grundsätzlich besteht aber auch die Möglichkeit, dass das hier als Rutsche genannte Bauteil auch aktive Förderelemente aufweist, beispielsweise nach Art eines Förderbandes, welches also zur aktiven Förderung der Einzelteile 4 in Richtung zum unteren Auswurfende der Rutsche 28 dient.

Um ein zuverlässiges Herausfallen der Einzelteile 4 aus dem jeweiligen Behälter 10 zu gewährleisten ist in bevorzugter Ausgestaltung eine Auswurfhilfe 46 vorgesehen. Diese ist lediglich strichpunktiert in der Fig. 3 angedeutet. Speziell handelt es sich bei dieser Auswurfhilfe 46 um eine Ausblasvorrichtung. Mit deren Hilfe wird beispielsweise über eine Düse Druckluft in den Behälter 10 geblasen, sodass evtl. noch anhaftende Einzelteile 4 gelöst werden und aus diesem herausfallen.

Anhand der vergrößerten Darstellung der Fig. 3 ist weiterhin zu erkennen, dass die einzelnen Behälter 10 eine vordere Seitenwand 48 sowie eine hintere Seitenwand 50 aufweisen. Daneben weisen sie noch einen Boden 52 sowie zwei gegenüberliegende Querwände auf. Die Seitenwände 48,50 erstrecken sich quer zur Förderrichtung 12.

Die jeweiligen Behälter 10 weisen insbesondere an ihrer vorderen Seitenwand 48 und im Ausführungsbeispiel an beiden Seitenwänden 48,50 Querleisten 54 auf, die bezüglich der Förderrichtung 12 schräg in Richtung zu dem vorlaufenden Behälter 10 geneigt sind. Die Behälter 10 schließen sich in Förderrichtung 12 unmittelbar aneinander an und liegen daher mit ihren Seitenwänden 48,50 aneinander an. Lediglich in den Umlenkbereichen 14,16 liegen die Behälter 10 nicht unmittelbar aneinander an. Die Querleisten 54 erstrecken sich dabei jeweils über die gesamte Breite eines Behälters 10. Die Querleisten 54 der vorderen Seitenwände 58 überdecken durch ihre Schrägstellung jeweils die hintere Seitenwand 50 des vorlaufenden Behälters.

Weiterhin ragt die Querleiste 54 der hinteren Seitenwand 50 etwas in den (eigenen) Behälter 10 hinein. Diese hintere Querleiste 54 wird von einer vorderen Querleiste 54 eines nachfolgenden Behälters überdeckt.

Die Einzelteile 4 werden über die vordere Seitenwand 48 ausgeschüttet. Speziell diese vordere Seitenwand 48 ist mit einer strukturierten Oberfläche, insbesondere als Riffelblech ausgebildet, sodass möglichst keine große Haftfläche zwischen den Einzelteilen 4 und der Seitenwand 48 ausgebildet werden können. Hierdurch ist ein zuverlässiges Entleeren unterstützt. Der jeweilige Boden 52 und beispielsweise ergänzend auch die Querwände oder die hintere Seitenwand 50 sind demgegenüber mit hier nicht näher dargestellten Öffnungen ausgebildet, über die beispielsweise überschüssiges Öl, Schmiermittel oder sonstige Flüssigkeiten von den Einzelteilen 4 abfließen können.

Der Betrieb der Fördervorrichtung 2 wird allgemein über eine Steuereinheit 56 gesteuert, die lediglich schematisiert in der Fig. 7 dargestellt ist. Diese weist eine Eingabeeinheit 58 auf, die im Ausführungsbeispiel als ein berührungssensitives Display ausgebildet ist. Diese Eingabeeinheit 58 dient zur Markierung der einzelnen Behälter 10 als Ausschussbehälter A oder als Gutteile-Behälter G.

Die einzelnen Behälter 10 sind beispielsweise durch Nummerierungen (Ziffern 1 bis 21 im Ausführungsbeispiel) auf dem Display dargestellt. Die (realen) Behälter 10 der Fördervorrichtung 2 weisen vorzugsweise identische Kennzeichnungen auf, sodass eine Zuordnung der Behälter 10 der Fördervorrichtung zu denen auf dem Display dargestellten möglich ist.

Alternativ ordnet die Steuereinheit den einzelnen Behältern lediglich feste Positionen zu (z.B. Position A ist die unterste Position, Position H ist die Auswurfposition....). D.h. nach einer Taktung (Weiterbeförderung um eine Position) wechselt ein jeweiliger Behälter 10 zur nächsten festen Position (z.B. von Position C nach Position D...) Durch Zählung der Takte und aus der Position weiß die Steuereinheit 56, wann der jeweilige Behälter 10 den Auswurfbereich 20 erreicht. Alternativ wird auf derartige Nummerierungen verzichtet. Beispielsweise sind die Behälter anderweitig markiert, z.B. durch Codes, die z.B. auf Aufklebern aufgebracht sind. Auch kann eine Identifizierung rein über die aktuelle Position des Behälters erfolgen. Allgemein erkennt bzw. zählt die Steuereinheit die Anzahl der Takte bis der identifizierte Behälter 10 an der Entleerungsposition ist und trifft dann die geeigneten Maßnahmen.

Während des laufenden Prozesses werden typischerweise Stichproben von einem Benutzer vorgenommen. Ist die Stichprobe in Ordnung, so wird von dem Benutzer über die Eingabeeinheit 56 ein jeweiliger Behälter als Gutteile-Behälter G gekennzeichnet. Im Ausführungsbeispiel betraf dies beispielsweise zuletzt den Behälter mit der Nummer "4". Im weiteren Verlauf stellt der Benutzer fest, dass der aktuell zu befüllende Behälter 10 mit der Nummer "9" Ausschussteile aufweist. Er kennzeichnet diesen daher als Ausschussbehälter A. Zu den dazwischen angeordneten Behältern mit den Ziffern "5" bis "8" wurden keine Stichproben durchgeführt. Die Steuereinheit 56 veranlasst nunmehr zunächst automatisch, dass auch die Behälter mit den Ziffern "5" bis "8" als Ausschussbehälter A gekennzeichnet werden, um sicherzustellen, dass kein Behälter 10 mit eventuellen Ausschussteilen als Gutteil-Behälter G weitergeführt wird.

Allgemein werden alle (ungeprüften) Behälter 10 die sich zwischen einem vorlaufenden geprüften Behälter 10 und einem nachlaufenden geprüften Behälter 10 befinden automatisch mit der Klassifizierung (Ausschussbehälter A bzw. Gutteil-Behälter G) des nachlaufenden geprüften Behälters 10 versehen. D. h. alle zum aktuell geprüften Behälter 10 vorlaufende Behälter (bis zum nächsten geprüften Behälter) bekommen die gleiche Klassifizierung wie der aktuell geprüfte Behälter 10.

Die Steuereinheit steuert dann automatisch in Abhängigkeit der identifizierten und markierten Behälter 10 die Rutsche 28 an. Erreicht ein jeweiliger Behälter 10 den oberen Umlenkbereich 16, steht also kurz vor dem Ausleeren, so verfährt die Steuereinheit 56 automatisch in Abhängigkeit der Kennzeichnung dieses Behälters als Ausschussbehälter A oder als Gutteile-Behälter G die Rutsche 28 in die entsprechende Position.

Durch diese Steuerung in Kombination mit der speziellen Ausgestaltung der Fördervorrichtung 2 insbesondere mit der teleskopisch ausfahrbaren Rutsche 28 ist daher ein automatisiertes Trennen der Einzelteile 4 in Gutteile und in Ausschussteile erreicht. Benutzerseitig sind keine aktiven Maßnahmen zum Entleeren der Ausschussbehälter A erforderlich.

### Bezugszeichenliste

- 2: Fördervorrichtung
- 4: Einzelteile
- 6: Fördereinheit
- 8: Förderstrang
- 10: Behälter
- 12: Förderrichtung
- 14: unterer Umlenkbereich
- 16: oberer Umlenkbereich
- 18: Gestell
- 20: Auswurfbereich
- 22: Sammelbehälter
- 24: Auffangtrichter
- 26: Ausschuss-Sammelbehälter
- 28: Rutsche
- 30: unterer Teilbereich
- 32: oberer Teilbereich
- 34: Fallschacht
- 36: oberes Auffangende
- 38: erster Führungsbereich
- 40: zweiter Führungsbereich
- 42: Abdeckung
- 44: Leitelemente
- 46: Auswurfhilfe
- 48: vordere Seitenwand
- 50: hintere Seitenwand
- 52: Boden
- 54: Querleiste
- 56: Steuereinheit
- 58: Eingabeeinheit

- α: Winkel
- β: Knickwinkel
- A: Ausschussbehälter
- G: Gutteile-Behälter

## Patentansprüche

1. Fördervorrichtung (29) zur Förderung von aus Einzelteilen (4) bestehendem Schüttgut in einer Förderrichtung (12) mit
- einem umlaufenden Förderstrang (8), der sich in Förderrichtung (12) von einem befüllseitigen Umlenkbereich (14) bis zu einem auswurfseitigen Umlenkbereich (16) erstreckt,
- mehreren Behältern (10), die an dem umlaufenden Förderstrang (8) befestigt sind, derart dass sie an den Umlenkbereichen (14,16) jeweils umgedreht werden,
- mit einem am oberen Umlenkbereich (16) angeordneten Auswurfbereich (20) für das in den einzelnen Behältern (10) befindliche Schüttgut,
- mit einer Rutsche (28) für Ausschussteile, die in den Auswurfbereich (20) einfahrbar ist, **dadurch gekennzeichnet, dass** die Fördervorrichtung
- mit einer Steuereinheit (56) zum Steuern des Betriebs der Fördervorrichtung (2) ausgestattet ist, die derart ausgebildet ist, dass die Rutsche (28) automatisch in den Auswurfbereich (20) verfahren wird, wenn ein Behälter (10) den oberen Umlenkbereich (16) erreicht, der als ein Ausschussbehälter (A) identifiziert ist.

2. Fördervorrichtung (2) nach Anspruch 1, bei der die Rutsche (28) unterhalb des Förderstrangs (8) in Richtung der Förderrichtung (12) verlaufend angeordnet ist.

3. Fördervorrichtung (2) nach einem der vorhergehenden Ansprüche, bei der die Rutsche (28) teleskopartig ausfahrbar ist

4. Fördervorrichtung (2) nach einem der vorhergehenden Ansprüche, bei der die Rutsche (28) ein oberes Auffangende (36) aufweist, das zum auswurfseitigen Umlenkbereich (16) orientiert ist, wobei das Auffangende (36) gegenläufige Führungsbereiche (38,40) aufweist, nämlich einen ersten Führungsbereich (38) für Ausschussteile und einen zweiten Führungsbereich (40) für Gutteile, wobei je nach Position der Rutsche (28) der erste Führungsbereich (38) oder der zweite Führungsbereich (40) unterhalb des auswurfseitigen Umlenkbereichs (16) positioniert ist.

5. Fördervorrichtung (2) nach dem vorhergehenden Anspruch, bei der die beiden Führungsbereiche (38,40) winklig zueinander angeordnet sind und der der zweite Führungsbereich (40) bevorzugt nach Art eines Trichters ausgebildet ist.

6. Fördervorrichtung (2) nach einem der vorhergehenden Ansprüche, bei der ein Sammelbehälter (22) für Gutteile angeordnet ist, der unterhalb des auswurfseitigen Umlenkbereiches angeordnet ist, wobei bevorzugt vom auswurfseitigen Umlenkbereich bis zum Sammelbehälter (22) ein wendelförmig verlaufendes Führungselement für die Gutteile angeordnet ist.

7. Fördervorrichtung (2) nach einem der vorhergehenden Ansprüche, bei der die Rutsche (28) zu einem Ausschuss-Sammelbehälter (26) für Ausschussteile führt, der unterhalb des Förderstrangs (8) angeordnet ist.

8. Fördervorrichtung (2) nach einem der vorhergehenden Ansprüche, bei der die Rutsche (28) eine obere, zum Förderstrang (8) orientierte Abdeckung (42) aufweist und insbesondere nach Art eines umlaufend geschlossenen Schachts ausgebildet ist.

9. Fördervorrichtung (2) nach einem der vorhergehenden Ansprüche, bei der am auswurfseitigen Umlenkbereich eine Auswurfhilfe (46) für die Einzelteile (4) zum Entfernen aus dem jeweiligen Behälter (10) angeordnet ist, die insbesondere als eine Ausblasvorrichtung ausgebildet ist.

10. Fördervorrichtung (2) nach einem der vorhergehenden Ansprüche, bei der die Behälter (10) in Förderrichtung (12) unmittelbar aneinander angrenzend angeordnet sind.

11. Fördervorrichtung (2) nach einem der vorhergehenden Ansprüche, bei der die Behälter (10) jeweils an einer Seitenwand (48,50) eine Querleiste (54) aufweisen, die jeweils eine Seitenwand (48,50) eines benachbarten Behälters (10) überdeckt, wobei die Querleiste (54) vorzugsweise an einer vorderen Seitenwand (48) angeordnet ist, so dass eine hintere Seitenwand (50) des in Förderrichtung (12) vorauslaufenden Behälters (10) überdeckt ist.

12. Fördervorrichtung (2) nach einem der vorhergehenden Ansprüche, bei der die Steuereinheit (56) eine Eingabeeinheit (58) zur Markierung eines Behälters (10) als Ausschussbehälter (A) oder als Gutteile-Behälter (B) aufweist.

13. Fördervorrichtung (2) nach einem der vorhergehenden Ansprüche, bei der die Steuereinheit (56) derart ausgebildet ist, dass nach einer Identifizierung eines Behälters (10) als Ausschussbehälter (A) automatisch sämtliche in Förderrichtung (12) vorlaufende Behälter (10) bis zu einem als Gutteile-Behälter (G) identifiziertem Behälter (10) als Ausschussbehälter (A) markiert werden.

14. Verfahren zum Fördern von aus Einzelteilen (4) bestehendem Schüttgut in einer Förderrichtung (12) mit Hilfe einer Fördervorrichtung (2), die aufweist
- einen umlaufenden Förderstrang (8), der sich in Förderrichtung (12) von einem befüllseitigen Umlenkbereich (14) bis zu einem auswurfseitigen Umlenkbereich (16) erstreckt,
- mehrere Behälter (10), die an dem umlaufenden Förderstrang (8) befestigt sind, derart dass sie an den Umlenkbereichen (14,16) jeweils umgedreht werden,
- einen am oberen Umlenkbereich (16) angeordneten Auswurfbereich (20) für das in den einzelnen Behältern (10) befindliche Schüttgut,
- eine Rutsche (28) für Ausschussteile, die automatisch in den Auswurfbereich (20) eingefahren wird, wenn ein Behälter (10) den oberen Umkehrbereich erreicht, der als ein Ausschussbehälter (A) identifiziert ist.

## Claims

1. Conveying apparatus (29) for conveying bulk material consisting of individual parts (4) in a conveying direction (12), with
- a circulating conveying line (8), which extends in the conveying direction (12) from a deflection region (14) at the filling side up to a deflection region (16) at the ejection side,
- a plurality of containers (10), which are fastened to the circulating conveying line (8) in such a manner that they are each inverted at the deflection regions (14, 16),
- with an ejection region (20) arranged at the upper deflection region (16) for the bulk material located in the individual containers (10),
- with a chute (28) for reject parts, which chute can be retracted into the ejection region (20), **characterized in that** the conveying apparatus
- is equipped with a control unit (56) for controlling the operation of the conveying apparatus (2), which control unit is designed in such a manner that the chute (28) is automatically moved into the ejection region (20) if a container (10) that has been identified as a reject container (A) reaches the upper deflection region (16).

2. Conveying apparatus (2) according to Claim 1, in which the chute (28) is arranged below the conveying line (8) so as to extend in the direction of the conveying direction (12).

3. Conveying apparatus (2) according to either of the preceding claims, in which the chute (28) can be extended telescopically.

4. Conveying apparatus (2) according to any of the preceding claims, in which the chute (28) has an upper collection end (36), which is oriented towards the deflection region (16) at the ejection side, wherein the collection end (36) has opposing guide regions (38, 40), specifically a first guide region (38) for reject parts and a second guide region (40) for acceptable parts, wherein, depending on the position of the chute (28), the first guide region (38) or the second guide region (40) is positioned below the deflection region (16) at the ejection side.

5. Conveying apparatus (2) according to the preceding claim, in which the two guide regions (38, 40) are arranged at an angle to one another and the second guide region (40) is preferably designed in the form of a funnel.

6. Conveying apparatus (2) according to any of the preceding claims, in which a collecting container (22) for acceptable parts is provided, which is arranged below the deflection region at the ejection side, wherein a helically extending guide element for the acceptable parts is preferably arranged from the deflection region at the ejection side up to the collecting container (22).

7. Conveying apparatus (2) according to any of the preceding claims, in which the chute (28) leads to a reject collecting container (26) for reject parts, which is arranged below the conveying line (8).

8. Conveying apparatus (2) according to any of the preceding claims, in which the chute (28) has an upper covering (42), which is oriented towards the conveying line (8) and is in particular designed in the form of a circumferentially closed shaft.

9. Conveying apparatus (2) according to any of the preceding claims, in which an ejection aid (46), which is in particular designed as a blow-out apparatus, is arranged at the deflection region at the ejection side for removing the individual parts (4) from the respective container (10).

10. Conveying apparatus (2) according to any of the preceding claims, in which the containers (10) are arranged so as to directly adjoin one another in the conveying direction (12).

11. Conveying apparatus (2) according to any of the preceding claims, in which the containers (10) each have a transverse strip (54) on a side wall (48, 50), each transverse strip covering a side wall (48, 50) of an adjacent container (10), wherein the transverse strip (54) is preferably arranged on a front side wall (48), so that a rear side wall (50) of the preceding container (10) in the conveying direction (12) is covered.

12. Conveying apparatus (2) according to any of the preceding claims, in which the control unit (56) has an input unit (58) for labelling a container (10) as a reject container (A) or as an acceptable-parts container (B).

13. Conveying apparatus (2) according to any of the preceding claims, in which the control unit (56) is designed in such a manner that, after a container (10) has been identified as a reject container (A), all of the containers (10) advancing in the conveying direction (12) up to a container (10) identified as an acceptable-parts container (G) are automatically labelled as reject containers (A).

14. Method for conveying bulk material consisting of individual parts (4) in a conveying direction (12) with the aid of a conveying apparatus (2), which has
- a circulating conveying line (8), which extends in the conveying direction (12) from a deflection region (14) at the filling side up to a deflection region (16) at the ejection side,
- a plurality of containers (10), which are fastened to the circulating conveying line (8) in such a manner that they are each inverted at the deflection regions (14, 16),
- an ejection region (20) arranged at the upper deflection region (16) for the bulk material located in the individual containers (10),
- a chute (28) for reject parts, which is automatically retracted into the ejection region (20) if a container (10) that has been identified as a reject container (A) reaches the upper reversal region.

## Revendications

1. Dispositif de transport (29) pour le transport de produits en vrac constitués de pièces individuelles (4) dans une direction de transport (12) avec
- une ligne de transport (8) en circulation, qui s'étend dans la direction de transport (12) d'une zone de renvoi (14) côté chargement jusqu'à une zone de renvoi (16) côté éjection,
- plusieurs contenants (10), qui sont fixés à la ligne de transport (8) en circulation, de telle sorte qu'ils sont respectivement retournés au niveau des zones de renvoi (14, 16),
- avec une zone d'éjection (20) agencée au niveau de la zone de renvoi supérieure (16) pour les produits en vrac se trouvant dans les contenants individuels (10),
- avec une goulotte (28) pour les pièces de rebut, qui peut être introduite dans la zone d'éjection (20), **caractérisé en ce que** le dispositif de transport
- est équipé d'une unité de commande (56) pour commander le fonctionnement du dispositif de transport (2), qui est configurée de telle sorte que la goulotte (28) est déplacée automatiquement dans la zone d'éjection (20) lorsqu'un contenant (10) qui est identifié comme un contenant de rebut (A) atteint la zone de renvoi supérieure (16).

2. Dispositif de transport (2) selon la revendication 1, dans lequel la goulotte (28) est agencée en dessous de la ligne de transport (8) en s'étendant dans la direction de la direction de transport (12).

3. Dispositif de transport (2) selon l'une quelconque des revendications précédentes, dans lequel la goulotte (28) est déployable de manière télescopique.

4. Dispositif de transport (2) selon l'une quelconque des revendications précédentes, dans lequel la goulotte (28) présente une extrémité de réception supérieure (36) orientée vers la zone de renvoi (16) côté éjection, l'extrémité de réception (36) présentant des zones de guidage opposées (38, 40), à savoir une première zone de guidage (38) pour les pièces de rebut et une deuxième zone de guidage (40) pour les pièces de bonne qualité, la première zone de guidage (38) ou la deuxième zone de guidage (40) étant positionnée en dessous de la zone de renvoi (16) côté éjection selon la position de la goulotte (28).

5. Dispositif de transport (2) selon la revendication précédente, dans lequel les deux zones de guidage (38, 40) sont agencées en angle l'une par rapport à l'autre et la deuxième zone de guidage (40) est de préférence configurée à la manière d'un entonnoir.

6. Dispositif de transport (2) selon l'une quelconque des revendications précédentes, dans lequel un contenant collecteur (22) est agencé pour les pièces de bonne qualité, qui est agencé au-dessous de la zone de renvoi côté éjection, un élément de guidage s'étendant en spirale pour les pièces de bonne qualité étant de préférence agencé de la zone de renvoi côté éjection jusqu'au contenant collecteur (22).

7. Dispositif de transport (2) selon l'une quelconque des revendications précédentes, dans lequel la goulotte (28) conduit à un contenant collecteur de rebuts (26) pour les pièces de rebut, qui est agencé en dessous de la ligne de transport (8).

8. Dispositif de transport (2) selon l'une quelconque des revendications précédentes, dans lequel la goulotte (28) présente un recouvrement supérieur (42) orienté vers la ligne de transport (8) et est notamment configurée à la manière d'un puits fermé en périphérie.

9. Dispositif de transport (2) selon l'une quelconque des revendications précédentes, dans lequel un auxiliaire d'éjection (46) pour les pièces individuelles (4) est agencé dans la zone de renvoi côté éjection pour l'enlèvement hors du contenant (10) respectif, qui est configuré notamment sous la forme d'un dispositif de soufflage.

10. Dispositif de transport (2) selon l'une quelconque des revendications précédentes, dans lequel les contenants (10) sont agencés de manière directement adjacente les uns aux autres dans la direction de transport (12).

11. Dispositif de transport (2) selon l'une quelconque des revendications précédentes, dans lequel les contenants (10) présentent chacun sur une paroi latérale (48, 50) une barre transversale (54) qui recouvre respectivement une paroi latérale (48, 50) d'un contenant (10) voisin, la barre transversale (54) étant de préférence agencée sur une paroi latérale avant (48), de telle sorte qu'une paroi latérale arrière (50) du contenant (10) en avant dans la direction de transport (12) est recouverte.

12. Dispositif de transport (2) selon l'une quelconque des revendications précédentes, dans lequel l'unité de commande (56) présente une unité d'entrée (58) pour le marquage d'un contenant (10) en tant que contenant de rebuts (A) ou en tant que contenant de pièces de bonne qualité (B).

13. Dispositif de transport (2) selon l'une quelconque des revendications précédentes, dans lequel l'unité de commande (56) est configurée de telle sorte qu'après une identification d'un contenant (10) en tant que contenant de rebuts (A), tous les contenants (10) avançant dans la direction de transport (12) sont automatiquement marqués en tant que contenants de rebuts (A) jusqu'à un contenant (10) identifié en tant que contenant de pièces de bonne qualité (G).

14. Procédé de transport de produits en vrac constitués de pièces individuelles (4) dans une direction de transport (12) à l'aide d'un dispositif de transport (2), qui présente
- une ligne de transport (8) en circulation, qui s'étend dans la direction de transport (12) d'une zone de renvoi (14) côté chargement jusqu'à une zone de renvoi (16) côté éjection,
- plusieurs contenants (10), qui sont fixés à la ligne de transport (8) en circulation de telle sorte qu'ils sont respectivement retournés au niveau des zones de renvoi (14, 16),
- avec une zone d'éjection (20) agencée dans la zone de renvoi supérieure (16) pour les produits en vrac se trouvant dans les contenants individuels (10),
- avec une goulotte (28) pour les pièces de rebut, qui est introduite automatiquement dans la zone d'éjection (20) lorsqu'un contenant (10), qui est identifié comme un contenant de rebut (A), atteint la zone de retour supérieure.
